(19) Europäisches Patentamt
European Patent Office
Office européen des brevets

(11) **EP 2 350 478 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: **09748974.4**

(22) Anmeldetag: **09.10.2009**

(51) Int Cl.:
*F16C 19/16* *(2006.01)*    *F16C 19/18* *(2006.01)*
*F16C 19/38* *(2006.01)*    *F16C 19/54* *(2006.01)*
*F16C 33/58* *(2006.01)*

(86) Internationale Anmeldenummer:
**PCT/EP2009/007249**

(87) Internationale Veröffentlichungsnummer:
**WO 2010/040539 (15.04.2010 Gazette 2010/15)**

(54) **VORRICHTUNG ZUR VERDREHBAREN KOPPLUNG ZWEIER KOAXIALER ANSCHLUSSELEMENTE**

DEVICE FOR ROTATABLY COUPLING TWO COAXIAL CONNECTION ELEMENTS

DISPOSITIF POUR L'ACCOUPLEMENT ROTATIF DE DEUX ÉLÉMENTS DE RACCORDEMENT COAXIAUX

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.10.2008 DE 102008050620**

(43) Veröffentlichungstag der Anmeldung:
**03.08.2011 Patentblatt 2011/31**

(73) Patentinhaber: **IMO Holding GmbH**
**91350 Gremsdorf (DE)**

(72) Erfinder: **FRANK, Hubertus**
**91315 Höchstadt (DE)**

(74) Vertreter: **Küchler, Stefan**
**Patentanwalt**
**Färberstrasse 20**
**90402 Nürnberg (DE)**

(56) Entgegenhaltungen:
DE-B1- 1 904 954    GB-A- 1 220 356
JP-A- 2005 308 091

**Beschreibung**

Die Erfindung richtet sich auf eine Vorrichtung zur verdrehbaren Kopplung zweier koaxialer Anschlußelemente, von denen wenigstens eines als kreisförmiger Ring ausgebildet ist, und welche wenigstens je eine ringförmige Fläche aufweisen, die der betreffenden Fläche des jeweils anderen Anschlußelements zugewandt, von dieser jedoch durch einen Spalt beabstandet ist, so dass sie um eine gedachte, zur Ringebene etwa lotrechte Achse (Drehachse) im Zentrum des ringförmigen Anschlußelements gegeneinander verdrehbar sind, wobei in dem Spalt zwischen den beiden Anschlußelementen eine als ein- oder mehrreihiges Wälzlager ausgebildete Drehlagerung angeordnet ist zur Aufnahme von Axial- und Radiallasten und Kippmomenten.

Derartige Drehverbindungen werden auf den unterschiedlichsten Gebieten sowie auch in den unterschiedlichsten Dimensionen verwendet. Denkt man bei dem Wort "Kugellager" noch an zueinander konzentrischr Ringe mit einem Durchmesser von einigen Zentimetern, so gibt es inzwischen derartige Wälzkörper-Drehverbindungen in Größenordnungen bis zu einem Durchmesser von 8 Metern. Der Umfang liegt dann bei bis zu etwa 25 Metern, also vergleichbar zu der Länge eines Personenzugwaggons. Andererseits soll der Querschnitt eines Rings aus Gewichtsgründen eine Größenordnung von 100 bis 200 Quadratzentimetern meistens nicht überschreiten. Solche filigranen Ringe sind von sich aus nicht steif genug, um bspw. elliptischen Verformungen entgegenwirken zu können, insbesondere auch deswegen, weil während des Betriebs enorme Kräfte und/oder Drehmomente auftreten können. Meist verfügt jeder der beiden Ringe über eine Vielzahl von kranzförmig angeordneten Befestigungsbohrungen, womit er an einer Tragkonstruktion reibschlüssig festgelegt wird. Diese Tragkonstruktion muß dann in der Lage sein, auftretende Verformungskräfte aufzunehmen und ohne erkennbare Verbiegung ertragen zu können. Ist diese - aus welchen Gründen auch immer - nicht in der Lage, die gewünschte, mechanische Steifigkeit zu liefern, so ist es kaum möglich, Kräfte in die Ringe einzuleiten oder von diesen aufzunehmen, um einer unerwünschten Verformung entgegenzuwirken, und der zuständige Konstrukteur steht vor einer nahezu unlösbaren Konstruktionsaufgabe.

Aus diesen Nachteilen des beschriebenen Standes der Technik resultiert das die Erfindung initiierende Problem, eine gattungsgemäße Drehverbindung derart weiterzubilden, dass es möglich wird, zusätzlich zu den dafür vorgesehenen Anschlußflächen, an welchen eine reibschlüssige Verbindung mit je einer Tragkonstruktion erfolgt, Kräfte in die Ringe einzuleiten oder von diesen aufzunehmen, um dadurch einer unerwünschten, bspw. elliptischen Verformung der Ringe entgegenzuwirken.

Die Lösung des gestellten Problems gelingt dadurch, dass wenigstens ein ringförmiges Anschlußelement an seiner dem Spalt abgewandten Fläche einen rundumlaufenden, flächigen Ansatz trägt, der einen länglichen oder langgestreckten Querschnitt aufweist und sich von dem Spalt weg erstreckt bis zu einer frei endenden, peripheren Umfangskante.

Ein solcher Ansatz überdeckt dabei die Anschlußfläche des betreffenden Rings nicht, so dass dessen Montage nicht behindert wird. Andererseits steht der Ansatz in Kontakt zu einem Ring der Drehverbindung und stützt denselben ab, kann also Kräfte mit demselben austauschen. Darüber hinaus bildet er - insbesondere mit seiner frei endenden, peripheren Umfangskante sowie mit daran angrenzenden Oberflächenbereichen - eine bequeme Möglichkeit, um Kräfte und/oder Dreh-, Kipp- oder Biegemomente aufzufangen oder mit einer oder mehreren anderen Einrichtungen auszutauschen. Insbesondere bei einem Axiallager könnte ein erfindungsgemäßer, flächiger Ansatz als rundumlaufende Schürze oder zylindermantelförmige Trommelfläche ausgebildet sein; im Allgemeinen wird er jedoch weder einem zylinder- noch einem kegelmnatelförmigem Verlauf folgen, sondern als ebener Kreisscheibenring ausgebildet sein, dessen Ebene von der Drehachse der Drehlagerung lotrecht durchsetzt ist.

Die Erfindung erlaubt insbesondere eine Weiterbildung dahingehend, dass wenigstens ein Teil des flächigen Ansatzes, insbesondere im Bereich nahe dessen peripherer Umfangskante, als rotationssymmetrische Anlagefläche(n) für Bremsbacken ausgebildet ist. Ähnlich einer Scheibenbremse kann mit derartigen Bremsbacken eine Bremskraft zwischen den Ringen erzeugt werden. Auf diesem Weg läßt sich mit einfachsten Mitteln eine Feststellbremse realisieren, oder gar eine dynamisch wirkende Bremse, um eine Relativverdrehung zwischen den Ringen bei Bedarf aktiv und schnell abzubremsen. Dadurch können bspw. bei größeren Anlagen teure Frequenzumrichter mit Energierückspeisung od. dgl. eingespart werden. Dabei muß die Oberfläche der peripheren, d.h. freien Umfangskante des erfindungsgemäßen Ansatzes nicht glatt sein. Sie könnte auch eine - regelmäßige oder unregelmäßige Struktur aufweisen, bspw. äquidistante Rippen od. dgl. Jedoch sollte darauf geachtet werden, dass der Ring insgesamt einigermaßen ausgewuchtet ist.

Indem der flächige Ansatz einstückig mit dem betreffenden ringförmigen Anschlußelement ausgebildet ist, können auch große (Brems-) Kräfte mühelos zu dem angeschlossenen Ring übertragen werden.

Es hat sich als günstig erwiesen, dass der radiale Abstand zwischen der peripheren Umfangskante des Ansatzes und der nächstgelegenen Wälzkörperführungsbahn kleiner ist als der Abstand dieser Wälzkörperführungsbahn von der Drehachse der Drehlagerung. Eine derartige Bemessungsregel stellt sicher, dass die radial zu der Drehachse gemessene Dickenerstreckung des rundumlaufenden Ansatzes klein im Verhältnis zum Durchmesser der Drehlagerung ist und damit sonstige Teile und Einrichtungen der betreffenden Maschine nicht in ihrer Funktionsweise beeinträchtigt.

Die Erfindung empfiehlt, den flächigen Ansatz an einer dem Spalt abgewandten Mantelfläche des betreffenden ringförmigen Anschlußelements anzuordnen. Dort kann er sich geradewegs in radialer Richtung von der betreffenden Mantelfläche weg erstrecken.

Die Erfindung sieht weiterhin vor, dass der flächige Ansatz die Gestalt einer Scheibe aufweist.

Es hat sich als günstig erwiesen, dass der flächige Ansatz entlang einer Ebene verläuft.

Dabei ist weiterhin vorgesehen, dass die Ebene des flächigen Ansatzes von der Drehachse der Drehlagerung lotrecht durchsetzt wird.

Eine weitere Optimierung erfährt die Erfindung dadurch, dass der flächige Ansatz im Bereich seiner peripheren Umfangskante einen verdickten Bereich aufweist, der über einen demgegenüber dünneren Steg mit dem betreffenden, ringförmigen Anschlußelement verbunden ist. Dieser verdickte Bereich hat eine höhere Steifigkeit als der von diesem zu dem eigentlichen, ringförmigen Anschlußelement verlaufende Steg. Zusammengenommen haben alle diese drei Elemente - dickerer und dünnerer Bereich des rundumlaufenden Ansatzes sowie das ringförmige Anschlußelement selbst - etwa einen Querschnitt durch ihren Umfang von der Form eines H. Der kreisscheibenförmige Mittelsteg erfährt dabei durch die beiden, rundumlaufenden Verdickungen an seinen beiden ringförmigen Umfangslinien - wovon eine Verdickung durch das eigentliche Anschlußelement selbst gebildet wird - eine erhebliche Aussteifung, ähnlich einem Profil mit I-Querschnitt, bei gleichzeitig minimaler Gewichtserhöhung.

Die beiden einander gegenüberliegenden Begrenzungsflächen des verdickten Bereichs, insbesondere dessen Ober- und Unterseite, sollten parallel zueinander verlaufen. Damit kann sowohl die Herstellung als auch ggf. eine Bremseinrichtung stark vereinfacht werden, da Scheiben mit konstanter Dicke sowie daran anlegbare Bremsbacken relativ einfach herzustellen sind.

Ähnliches gilt für die beiden einander gegenüberliegenden Begrenzungsflächen des den verdickten Bereich an der peripheren Umfangskante mit dem betreffenden, ringförmigen Anschlußelement verbindenden Stegs insbesondere dessen Ober- und Unterseite; auch diese sollten parallel zueinander verlaufen, sowie vorzugsweise in exakt radialer Richtung, bezogen auf die Drehachse der Drehlagerung. Eine solche Bemessung bildet einen optimalen Kompromiss zwischen maximaler Steifigkeit einerseits und minimalem Gewicht andererseits. Gerade bei dem erfindungsgemäßen Ansatz sollte besonderer Wert auf eine hohe Verformungssteifigkeit gelegt werden, damit keine Unwucht entsteht, die zu Vibrationen führen oder gar eine Taumelbewegung zur Folge haben könnte.

Besondere Vorteile ergeben sich, wenn die in Längsrichtung des Ansatzquerschnitts gemessenen Längen der Querschnitte des verdickten Bereichs einerseits und des Stegs andererseits etwa gleich groß sind:

$$(l_{pB} - l_{St}) / (l_{pB} + l_{St}) \leq k_1,$$

wobei

$l_{pB} =$ radiale Länge des Querschnitts des verdickten, peripheren Bereichs;

$l_{St} =$ radiale Länge des Querschnitts des Stegs zwischen dem verdickten, peripheren Bereich und dem betreffenden, ringförmigen Anschlußelement;

$k_1 =$ bspw. 0,25, vorzugsweise 0,2, insbesondere 0,15.

Indem solchermaßen die radiale Längserstreckung des verjüngten bzw. dünneren Stegbereichs nicht allzu groß gewählt wird, werden die an den ringförmigen Enden dieses Stegbereichs auftretenden Biegemomente auf ungefährliche Werte begrenzt.

Eine andere Bemessungsvorschrift sieht vor, dass die zu der Längsrichtung des Querschnitts des verdickten Bereichs parallele Erstreckung des damit verbundenen, ringförmigen Anschlußelements etwa gleich groß oder größer ist als die Länge des verdickten Bereichs:

$$l_{rA} \geq l_{pB}$$

wobei

$l_{rA} =$ zu der Längsrichtung des Querschnitts des flächigen Ansatzes parallele Längserstreckung des mit dem flächigen Ansatz verbundenen, ringförmigen Anschlußelements.

Damit wird die radiale Dicke des des der Versteifung dienenden, verdickten Bereichs des Ansatzes eingeschränkt, um einerseits das Trägheitsmoment der ggf. zu beschleunigenden Massen der Drehverbindung nicht übermäßig zu erhöhen und andererseits auch deren Baugröße und Gewicht auf akzeptable Werte zu begrenzen.

Unter den selben Gesichtspunkten ergibt sich eine ähnliche, jedoch noch strengere Einschränkung für die Querschnittsabmessungen des rundumlaufenden Ansatzes dadurch, dass die zu der Längsrichtung des Querschnitts des verdickten Bereichs parallele Erstreckung des damit verbundenen, ringförmigen Anschlußelements kleiner oder etwa gleich groß ist wie die Länge des Querschnitts des flächigen Ansatzes:

$$k_2 * l_{rA} \leq l_f$$

wobei

$l_{fA}$ = Länge des flächigen Ansatzes ($l_{fA} = l_{pB} + l_{St}$)
$k_2$ = bspw. 0,85, vorzugsweise 0,9, insbesondere 0,95.

Es liegt im Rahmen der Erfindung, dass der verdickte, periphere Bereich wenigstens doppelt so dick ist wie der diesen mit dem betreffenden, ringförmigen Anschlußelement verbindenden Steges, vorzugsweise wenigstens 2,5 mal so dick, insbesondere etwa 3 mal so dick. Damit ergibt sich eine sehr steife Struktur mit einem deutlich ausgeprägten H-Querschnitt am Umfang.

Jedoch sollte andererseits die zur Drehachse parallele Höhenerstreckung des verdickten, peripheren Bereichs nicht größer sein als die Höhe des betreffenden, d.h., damit direkt verbundenen, ringförmigen Anschlußelements selbst, Bspw. gleich oder kleiner als drei Viertel der Höhe dieses Anschlußelements, vorzugsweise gleich oder kleiner als zwei Drittel der Höhe dieses Anschlußelements, insbesondere gleich oder kleiner als die Hälfte der Höhe dieses Anschlußelements. Es hat sich als besser erwiesen, stattdessen die radiale Erstreckung des verdickten Bereichs zu erhöhen, bis dieser Teil des Ansatzes einen etwa quadratischen Querschnitt aufweist:

$$0,8 \leq l_{pB} / d_{pB} \leq 1,2,$$

wobei

$d_{pB}$ = Dicke des Querschnitts des verdickten, peripheren Bereichs.

Auch diese Bemessung trägt zur Ausgewogenheit zwischen Steifigkeit, Gewicht und Trägheitsmoment bei.

Ferner sollten in dem/den Übergangsbereich(en) von dem Steg in die angrenzende Fläche des verdickten Bereichs einerseits und/oder des betreffenden, ringförmigen Anschlußelements andererseits der/die querschnittliche(n) Krümmungsradius (-en) größer ist/sind als 1 mm, vorzugsweise größer als 2 mm, insbesondere größer als 3 mm. Damit werden Kerbwirkungen in diesen Bereichen vermieden, wodurch selbst bei einem rauhen Betrieb eine optimale Betriebsdauer sichergestellt wird.

Es hat sich bewährt, dass die beiden ringförmigen Anschlußelemente radial ineinander angeordnet sind, vorzugsweise derart, dass die Hauptrichtung des dazwischen verlaufenden Spaltes etwa einer Zylindermantelfläche folgt. Damit ergibt sich eine minimale Bauhöhe der Gesamtanordnung.

Diese Gesamthöhe wird vorzugsweise auch durch den erfindungsgemäßen Ansatz nicht oder zumindest nicht erheblich vergrößert, indem sich dessen achsparallele Höhenerstreckung zu 80 % oder mehr, vorzugsweise zu 90 % oder mehr, insbesondere vollständig mit jeweils wenigstens einem der ringförmigen Anschlußelemente überlappt.

Oftmals ist die in Richtung der Drehachse der Drehlagerung gemessene Höhe jedes ringförmigen Anschlußelements jeweils kleiner als die dazu parallele Gesamthöhe der Drehverbindung; bspw. sind die beiden ringförmigen Anschlußelemente zumeist um ein geringes Maß in axialer Richtung gegeneinander versetzt, insbesondere derart, dass zwei jeweils nur durch den Spalt voneinander getrennte, vorzugsweise ebene Flächen der ringförmigen Anschlußelemente in axialer Richtung gegeneinander versetzt sind. Dabei definiert der Abstand zwischen den jeweils in axialer Richtung nach außen vorspringenden Flächen die Gesamthöhe der Drehverbindung, wenn der erfindungsgemäße Ansatz nirgendwo über die beiden, jeweils in axialer Richtung nach außen vorspringenden Flächen übersteht.

Die jeweils in axialer Richtung nach außen vorspringenden Flächen der beiden ringförmigen Anschlußelemente definieren auch deren jeweilige, bevorzugte Anschlußfläche; dabei liegt die bevorzugte Anschlußfläche eines Anschlußelements an der Oberseite der Drehverbindung und die bevorzugte Anschlußfläche des anderen Anschlußelements an der Unterseite der Drehverbindung.

Wenn sich der erfindungsgemäße Ansatz vollständig zwischen den von diesen beiden Anschlußflächen jeweils aufgespannten Ebenen befindet, ergibt sich eine minimale Bauhöhe der Drehverbindung. In diesem Fall sieht die Erfindung weiterhin vor, dass der in Richtung der Drehachse der Drehlagerung gemessene Abstand des flächigen Ansatzes zu der bevorzugten Anschlußfläche des mit ihm verbundenen, ringförmigen Anschlußelements gleich oder größer ist als sein Abstand zu der gegenüberliegenden Stirnseite des betreffenden Anschlußelements. Dadurch wird im Allgemeinen der Einbau einer solchen Drehlagerung erleichtert, indem der Ansatz beim Festlegen des damit verbundenen Anschlußelements an einem dafür vorgesehenen Maschinen- oder Anlagenteil untergriffen werden kann und/oder eine visuelle Kontrolle der korrekten Ausrichtung zwischen dem Ring und dem Maschinen- oder Anlagenteil erlaubt.

Ferner eröffnet die Erfindung die Möglichkeit, dass ein mit dem flächigen Ansatz nicht einstückig verbundenes, ringförmiges Anschlußelement oder ein derartig von dem flächigen Ansatz getrenntes Teil eines solchen mit einer umlaufenden Verzahnung versehen sein kann. Eine solche Verzahnung erlaubt den aktiven Drehantrieb und damit eine aktive Drehverstellung der beiden Ringe eines solchen Lagers und bildet somit in gewisser Hinsicht ein Pendant zu dem erfindungsgemäßen Ansatz, der zum Abbremsen und Stillsetzen der beiden, gegeneinander verdrehbaren Ringe verwendet werden kann.

Eine solche Verzahnung kann an der dem flächigen Ansatz abgewandten Mantelfläche der Drehverbindung angeordnet sein. In diesem Fall könnte nahezu eine gesamte Mantelfläche eines Rings der Drehverbindung komplett, d.h., auf ihrer ganzen Höhe, verzahnt sein, so dass - bei entsprechend dickem Antriebsritzel, -zahnrad oder -schnecke die Zahnflankenbelastung so weit als möglich reduziert werden kann.

Allerdings müßte in diesem Fall das Chassis einer aktiven, bspw. mit Bremsbacken ausgerüsteten Bremseinrichtung an dem jeweils anderen Maschinenteil angeordnet sein wie der Antriebsmotor. Das bedeutet, dass zumindest eines von diesen beiden Antriebselementen (welche natürlich jeweils auch mehrfach vorhanden sein können, bspw. mehrere über den Umfang verteilt angeordnete, Antriebsritzel oder -schnecken oder Bremseinrichtungen) an einem sich während des Betriebs drehenden Maschinen- oder Anlagenteil festgelegt sein müßte. Das könnte manchmal Probleme mit der jeweiligen Energiezuführung bedingen. In diesen Fällen könnte es besser sein, eine umlaufende Verzahnung an dem selben ringförmigen Anschlußelement anzuordnen wie den erfindungsgemäßen Ansatz. Wird beim Einbau dieses Anschlußelement mit einem verdrehbaren Maschinen- oder Anlagenteil verbunden, das andere dagegen mit einem feststehenden Fundament oder Chassis, so können Antriebs- und Bremseinrichtungen beide an eben diesem Fundament oder Chassis angeordnet werden, wo sich die Zuführung von Energie durch Kabel oder Schläuche problemlos gestaltet.

Damit die Bremsbacken von beiden Seiten an den solchermaßen als Bremsscheibe dienenden Ansatz angelegt werden können, sollte die Verzahnung zu dem flächigen Ansatz einen axialen Abstand aufweisen, bspw. von wenigstens 8 mm, vorzugsweise von 10 mm oder mehr, insbesondere von 15 mm oder mehr.

Eine andere Möglichkeit, um den Bewegungsraum der Bremsbacken freizuhalten, besteht darin, eine Verzahnung gegenüber dem flächigen Ansatz in radialer Richtung zu dem betreffenden, ringförmigen Anschlußelement hin zurück zu versetzen. Dann können die Bremsbacken außerhalb der Verzahnung an den erfindungsgemäßen Ansatz angelegt werden.

In wenigstens einer Stirnseite wenigstens eines Anschlußelements - einer sog. Anschlußfläche - sollten kranzförmig angeordnete Befestigungsmittel für die Festlegung dieses Anschlußelements an einem Anlagenteil vorgesehen sein. Als derartige Befestigungsmittel eignen sich besonders Bohrungen zum Ein- oder Hindurchstecken von Schrauben, Bolzen, Gewindebolzen od. dgl. Dabei sollten diese Bohrungen entweder von einer Stirnseite zur gegenüberliegenden durchgehend ausgebildet sein und/oder ein Innengewinde aufweisen. Ein bevorzugter Ort für derartige Befestigungsmittel, bspw. Bohrungen, findet sich radial zwischen einer Verzahnung und der eigentlichen Drehlagerung bzw. der betreffenden Wälzkörperführungsbahn, sofern diese Elemente an einander gegenüberliegenden Mantelflächen eines gemeinsamen Rotationskörpers eingearbeitet sind, bspw. eingefräst oder auf anderem Weg eingearbeitet.

beitet.

Die Erfindung läßt sich einsetzen bei Drehverbindungen mit einer oder mehreren Wälzkörperreihen, vorzugsweise wenigstens zwei Wälzkörperreihen, insbesondere drei Wälzkörperreihen.

Wenigstens eine Wälzkörperreihe kann dabei kugelförmige Wälzkörper aufweisen, aber auch eine oder mehrere Wälzkörperreihen mit rollen-, nadel-, tonnen- oder kegelförmigen Wälzkörpern sind denkbar.

Falls mehrere Wälzkörperreihen vorhanden sind, sollten wenigstens zwei Wälzkörperreihen gegeneinander versetzt sein, insbesondere in axialer Richtung, bspw. um Kippmomente aufnehmen und übertragen zu können.

Um das Eindringen von Fremdkörpern in die Wälzkörperlaufbahnen zu vermeiden, ist erfindungsgemäß vorgesehen, dass der Spalt zwischen den beiden ringförmigen Anschlußelementen entlang wenigstens eines linienförmigen Mündungsbereichs, insbesondere an beiden Mündungsbereichen, (jeweils) durch wenigstens ein ringförmiges Dichtungselement abgedichtet ist. Es kann sich dabei um wenigstens einen elastischen Dichtring handeln, der an einem Anschlußelement festgelegt ist und dessen Dichtlippe elastisch an das andere Anschlußelement angepreßt wird.

Beispielsweise socc der abgedichtete, spaltförmige Hohlraum zwischen den beiden ringförmigen Anschlußelementen mit einem Schmiermittel gefüllt sein Obzwar hierbei auch Öl in Betracht kommt, gibt die Erfindung im Allgemeinen Schmierfett den Vorzug, weil dieses an alle Stellen der Wälzkörperlaufbahnen gelangt und daher von der Ausrichtung des Lagers unabhängig alle Wälzkörper und -laufbahnen gleichermaßen benetzt.

Weitere Merkmale, Eigenschaften, Vorteile und Wirkungen auf der Basis der Erfindung ergeben sich aus der folgenden Beschreibung bevorzugter Ausführungsformen der Erfindung sowie anhand der Zeichnung. Hierbei zeigt:

Fig. 1    einen Querschnitt durch die ringförmigen Anschlußelemente einer ersten Ausführungsform der Erfindung;

Fig. 2    eine der Fig. 1 entsprechende Darstellung einer zweiten Ausführungsform der Erfindung; sowie

Fig. 3    eine der Fig. 1 entsprechende Darstellung einer dritten Ausführungsform der Erfindung.

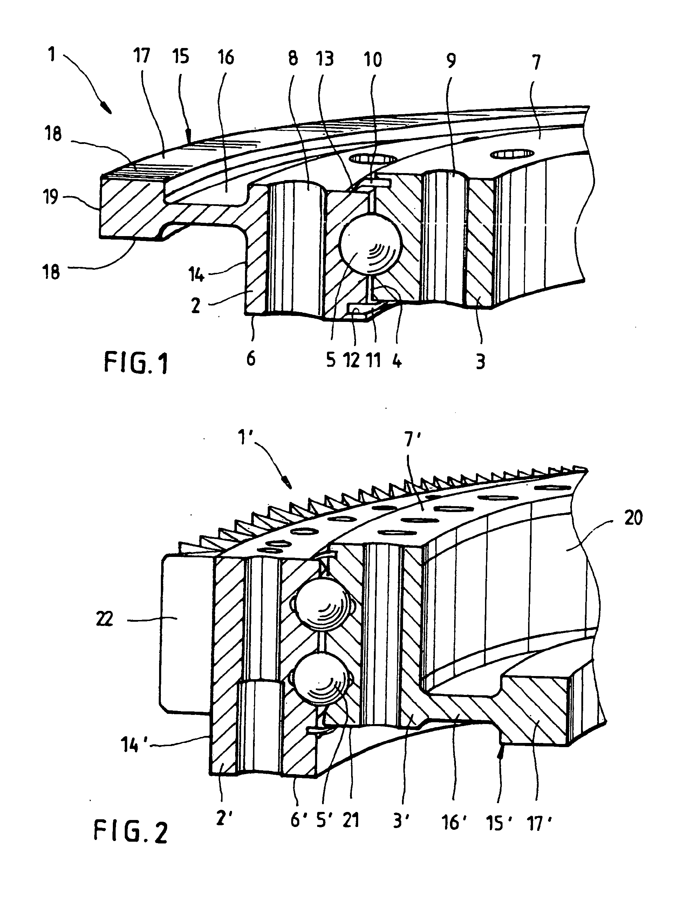

Die erfindungsgemäße Vorrichtung 1 nach Fig. 1 bildet eine Art Minimalausführung. Es handelt sich dabei um eine Drehverbindung mit einem Außenring 2 und einem dazu konzentrischen Innenring 3. Beide Ringe 2, 3 sind durch einen Spalt 4 voneinander getrennt und dadurch gegeneinander verdrehbar. Die Leichtgängigkeit der Verdrehung sichert eine Reihe von kugelförmigen Wälzkörpern 5, welche zwischen zwei Laufbahnen an der jeweils dem Spalt 4 zugewandten Mantelseite der beiden Ringe 2, 3 abrollen. Die einzelnen Wälzkörper 5 können durch Abstandskörper und/oder durch einen Käfig in gleichmäßigen Abständen gehalten werden.

Die beiden Ringe 2, 3 haben etwa die selbe, parallel zur Drehachse der Drehverbindung gemessene Höhe, sind aber in axialer Richtung um ein geringes Maß gegeneinander versetzt. Dadurch liegen weder die Oberseiten der beiden Ringe 2, 3 in einer gemeinsamen Ebene, noch ihre Unterseiten. Vielmehr liegt bei der gezeichneten Ausführungsform die Unterseite eines ersten Anschlußelements 2, im gezeichneten Fall die des Außenrings 2, tiefer als die des jeweils anderen, nämlich des Innenrings 3 und bildet eine erste, ebene und ringförmige Anschlußfläche 6 zur Festlegung des betreffenden, äußeren Anschlußelements 2 an einem Fundament, Chassis oder einem sonstigen Maschinen- oder Anlagenteil. Andererseits überragt die Oberseite des anderen, in diesem Fall des inneren Anschlußelements 3, die des ersteren Anschlußelements 2, und bildet eine ebenfalls ringförmige Anschlußfläche 7 zur Festlegung des betreffenden, inneren Anschlußelements 3 an 4 Maschinen- oder Anlagenteil.

Die beiden Ringe sind von achsparallelen Bohrungen 8, 9 durchsetzt, welche von Schrauben, Bolzen od. dgl. durchsetzt werden können, um die betreffende Anschlußfläche 6, 7 reibschlüssig an einem Fundament, Chassis, Maschinen- oder Anlagenteil festzulegen.

Der Spalt 4 wird an beiden, ringförmigen Mündungen durch je eine Dichtung 10, 11 übergriffen und dadurch verschlossen. Die beiden, ringförmigen Dichtungen 10, 11 bestehen vorzugsweise aus einem elastischen Material. Sie sind jeweils an einem Anschlußelement 2, 3 festgelegt, bspw. in einer rundumlaufenden Nut 12 an der dem Spalt 4 zugewandten Mantelseite eines Anschlußelements 2, 3 knapp unterhalb der betreffenden Anschlußfläche 6, 7. Während in diese Nut eine umlaufende, rückwärtige Kante einer Dichtung 10, 11 eingelegt ist, so ist die jeweils gegenüberliegende, d.h. vordere Kante einer Dichtung 10, 11 als Dichtlippe 13 ausgebildet, welche die nächstgelegene Ober- oder Unterseite des jeweils anderen Rings 3, 2 übegreift und elastisch an diese angepreßt wird.

An einer dem Spalt 4 abgewandten Mantelseite eines Rings 2, 3, im vorliegenden Fall an der außenliegenden Mantelseite 14 des äußeren Rings 2, ist ein rundumlaufender, bundartiger Ansatz 15 angeformt.

Der bundartige Ansatz 15 besteht aus zwei Teilen: Direkt an die Mantelfläche 14 schließt sich ein rundumlaufender Steg 16 an, der an seiner Peripherie in einen demgegenüber verdickten Bereich 17 übergeht. Die radialen Erstreckungen beider Bereiche 16, 17 sind jeweils kleiner als die radiale Erstreckung des damit verbundenen Außenrings 2, wie auch des damit nicht verbundenen Innenrings 3. Die radiale Erstreckung des verdickten Bereichs 17 ist etwas kleiner als die radiale Erstreckung des Verbindungsstegs 16.

Die achsparallele Stärke des verdickten Bereichs 17 entspricht etwa dessen radialer Erstreckung, so dass sein Querschnitt näherungsweise als quadratisch bezeichnet werden kann. Die achsparallele Stärke des Verbindungsstegs 16 entspricht dagegen nur etwa einem Drittel der Stärke des verdickten Bereichs 17.

Alle Teile 16, 17 des Ansatzes 15 sind zusammen mit dem damit verbundenen Ring 2 aus einem einzigen Metallstück hergestellt, bspw. durch Drehen aus einem ringförmigen Rohling. Die Übergangsbereiche des Verbindungsstegs 16 in die angrenzende Mantelfläche 14 des betreffenden Rings 2 einerseits wie auch in den verdickten Bereich 17 andererseits sind mit einem vergleichsweise großen Krümmungsradius ausgeführt, bspw. 1 mm oder mehr, vorzugsweise 2 mm oder mehr, insbesondere 3 mm oder mehr.

Der verdickte Bereich 17 an der Peripherie des Verbindungsstegs 16 dient einerseits als Stützring, der auch bei starken Belastungen einer unerwünschten Verformung des betreffenden Rings 2 entgegenwirkt; andererseits kann er auch nach Art einer Bremsscheibe verwendet werden, indem bspw. zwei Bremsbacken von oben und von unten gegen die betreffenden Oberflächen 18 angepreßt werden. Natürlich können am Umfang auch mehrere derartige Bremseinheiten verteilt angeordnet sein.

Die freie Mantelfläche 19 des verdickten Bereichs 17 kann glatt ausgeführt sein, oder mit einer Struktur versehen sein.

Der ringförmige Ansatz 15 ist von der Anschlußfläche 6 des betreffenden Rings 2 weg verlagert.

Die Ausführungsform 1' unterscheidet sich von der ersteren u.a. dadurch, dass hier mehrere, nämlich zwei Reihen von (kugelförmigen) Wälzkörpern 5' vorhanden sind, nämlich in axialer Richtung gegeneinander versetzt.

Des weiteren befindet sich der Ansatz 15' hier nicht an der Außenseite des Außenrings 2', sondern an der Innenseite 20 des Innenrings 3', ist jedoch auch in diesem Fall von der Anschlußfläche 7' des betreffenden Rings 3' weg zu der gegenüberliegenden Stirnseite 21 hin verlagert.

Außerdem ist bei dieser Ausführungsform an der Außenseite 14' des Außenrings 2' eine rundumlaufende Zahnreihe 22 zum Eingriff mit einem Ritzel, Schnecke od. dgl. Diese Verzahnung 22 befindet sich etwa auf Höhe des Ansatzes 15'.

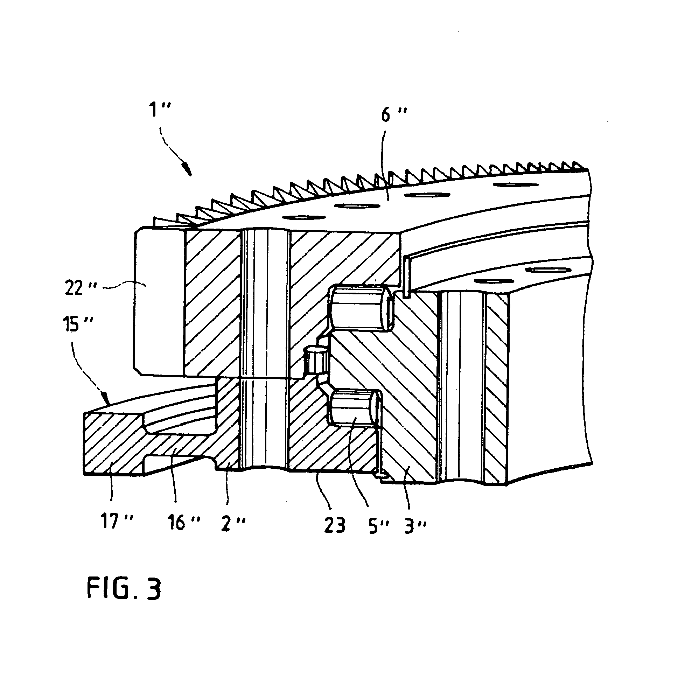

Die Ausführungsform 1' zeigt die Besonderheit, dass ein antreibender Eingriff an der Verzahnung 22 des Außenrings 2' zu erfolgen hat, während ein abbremsender Eingriff an dem Ansatz 15' des Innenring 3' stattfindet. Demnach müssen ein Antriebsmotor und eine Bremseinrichtung an unterschiedlichen, gegeneinander verdrehbaren Maschinen- oder Anlagenteilen verankert werden, was Probleme mit der Energiezuführung mit sich bringen könnte. Aus diesem Grunde ist bei der Ausführungsform 1" nach Fig. 3 der Ansatz 15" und die Verzahnung 22" an dem selben Anschlußelement vorgesehen, nämlich jeweils am Außenring 2", und zwar in axialer Richtung gegeneinander versetzt, d.h., etwa übereinander, jedoch durch einen Abstand voneinander getrennt, damit ein von oben auf den Ansatz 15" aufgesetzter Bremsbacken nicht in Kontakt mit der Verzahnung 22" gelangt. Wiederum ist der Ansatz 15" von der Anschlußfläche 6" weg zur gegenüberliegenden Stirnseite 23 hin verlagert.

Schließlich sind bei dieser Ausführungsform insgesamt drei Wälzkörperreihen, jeweils mit rollenförmigen Wälzkörpern 5", vorhanden. Zur Erleichterung des Zusammenbaus ist der Außenring 2" entlang einer horizontalen Ebene unterteilt.

## Patentansprüche

**1.** Vorrichtung (1;1';1") zur verdrehbaren Kopplung zweier koaxialer Anschlußelemente (2,3), von denen wenigstens eines als kreisförmiger Ring ausgebildet ist, und welche wenigstens je eine ringförmige Fläche aufweisen, die der betreffenden Fläche des jeweils anderen Anschlußelements (2,3) zugewandt, von dieser jedoch durch einen Spalt (4) beabstandet ist, so dass sie um eine gedachte, zur Ringebene etwa lotrechte Achse im Zentrum des ringförmigen Anschlußelements (2,3) gegeneinander verdrehbar sind, wobei in dem Spalt (4) zwischen den beiden Anschlußelementen (2,3) eine als ein- oder mehrreihiges Wälzlager ausgebildete Drehlagerung angeordnet ist zur Aufnahme von Axial- und Radiallasten und Kippmomenten, und wobei in wenigstens einer Stirnseite (6,7,21,23) wenigstens eines Anschlußelements (2,3) kranzförmig angeordnete Befestigungsmittel für die Festlegung dieses Anschlußelements (2,3) an einem Anlagenteil vorgesehen sind, und wobei ferner wenigstens ein ringförmiges Anschlußelement (2,3) an seiner dem Spalt (4) abgewandten Fläche (14,20) einen rundumlaufenden, flächigen Ansatz (15) aufweist, der einen länglichen oder langgestreckten Querschnitt aufweist und sich von dem Spalt (4) weg erstreckt bis zu einer frei endenden, peripheren Umfangskante (19), **dadurch gekennzeichnet, dass**

a) der flächige Ansatz (15) im Bereich seiner peripheren Umfangskante (19) einen verdickten Bereich (17) aufweist, der über einen demgegenüber dünneren Steg (16) mit dem betreffenden, ringförmigen Anschlußelement (2,3) verbunden ist, wobei

b) der Spalt (4) zwischen den beiden ringförmigen Anschlußelementen (2,3) entlang wenigstens eines linienförmigen Mündungsbereichs, insbesondere an beiden Mündungsbereichen, durch wenigstens ein ringförmiges Dichtungselement (10,11) abgedichtet ist.

**2.** Vorrichtung (1;1';1") nach Anspruch 1, **dadurch ge-**

**kennzeichnet, dass** wenigstens ein Teil des flächigen Ansatzes (15), insbesondere im Bereich nahe dessen peripherer Umfangskante (19), als rotationssymmetrische Anlagefläche(n) (18) für Bremsbakken ausgebildet ist.

**3.** Vorrichtung nach Anspruch 1 oder 2, **dadurch gekennzeichnet, dass** der radiale Abstand zwischen der peripheren Umfangskante (19) des Ansatzes (15) und der nächstgelegenen Führungsbahn für Wälzkörper (5) kleiner ist als der Abstand dieser Wälzkörperführungsbahn von der Drehachse der Drehlagerung (1).

**4.** Vorrichtung nach einem der Ansprüche 1 bis 3, **dadurch gekennzeichnet, dass** der flächige Ansatz (15) einstückig mit dem betreffenden ringförmigen Anschlußelement (2,3) ausgebildet ist.

**5.** Vorrichtung nach einem der Ansprüche 1 bis 4, **dadurch gekennzeichnet, dass** der flächige Ansatz (15) an einer dem Spalt (4) abgewandten Mantelfläche (14,20) des betreffenden ringförmigen Anschlußelements (2,3) angeordnet ist.

**6.** Vorrichtung nach einem der vorhergehenden Ansprüche, **dadurch gekennzeichnet, dass** der flächige Ansatz (15) die Gestalt einer Scheibe aufweist und/oder entlang einer Ebene verläuft, die vorzugsweise von der Drehachse der Drehlagerung (1) lotrecht durchsetzt wird.

**7.** Vorrichtung nach einem der vorhergehenden Ansprüche, **dadurch gekennzeichnet, dass** die beiden einander gegenüberliegenden Begrenzungsflächen (18) des verdickten Bereichs (17), insbesondere dessen Ober- und Unterseite, und/oder die beiden einander gegenüberliegenden Begrenzungsflächen des den verdickten Bereich (17) an der peripheren Umfangskante (19) mit dem betreffenden, ringförmigen Anschlußelement (2,3) verbindenden Stegs (16), insbesondere dessen Ober- und Unterseite, parallel zueinander verlaufen.

**8.** Vorrichtung nach einem der vorhergehenden Ansprüche, **dadurch gekennzeichnet, dass** die Längen der Querschnitte des verdickten Bereichs (17) einerseits und des Stegs (16) andererseits etwa gleich groß sind:

$$(l_{pB} - l_{St}) / (l_{pB} + l_{St}) \leq k_1,$$

wobei

$l_{pB}$ = Länge des Querschnitts des verdickten, peripheren Bereichs;

$l_{St}$ = Länge des Querschnitts des Stegs zwischen dem verdickten, peripheren Bereich und dem betreffenden, ringförmigen Anschlußelement;

$k_1$ = bspw. 0,25, vorzugsweise 0,2, insbesondere 0,15.

9. Vorrichtung nach einem der vorhergehenden Ansprüche, **dadurch gekennzeichnet, dass** die zu der Längsrichtung des Querschnitts des verdickten Bereichs (17) parallele Erstreckung des damit verbundenen, ringförmigen Anschlußelements (2,3) etwa gleich groß oder größer ist als die Länge des verdickten Bereichs (17):

$$l_{rA} \geq l_{pB}$$

wobei

$l_{rA}$ = zu der Längsrichtung des Querschnitts des flächigen Ansatzes parallele Längserstreckung des mit dem flächigen Ansatz verbundenen, ringförmigen Anschlußelements.

10. Vorrichtung nach einem der vorhergehenden Ansprüche, **dadurch gekennzeichnet, dass** die zu der Längsrichtung des Querschnitts des verdickten Bereichs (17) parallele Erstreckung des damit verbundenen, ringförmigen Anschlußelements (2,3) kleiner oder etwa gleich groß ist wie die Länge des Querschnitts des flächigen Ansatzes (15):

$$k_2 \, {}^* \, l_{rA} \leq l_{fA}$$

wobei

$l_{fA}$ = Länge des flächigen Ansatzes ($l_{fA} = l_{pB} + l_{St}$)
$k_2$ = bspw. 0,85, vorzugsweise 0,9, insbesondere 0,95.

11. Vorrichtung nach einem der vorhergehenden Ansprüche, **dadurch gekennzeichnet, dass** der verdickte, periphere Bereich (17) wenigstens doppelt so dick ist wie der diesen mit dem betreffenden, ringförmigen Anschlußelement (2,3) verbindenden Steges (16), vorzugsweise wenigstens 2,5 mal so dick, insbesondere etwa 3 mal so dick.

12. Vorrichtung nach einem der vorhergehenden Ansprüche, **dadurch gekennzeichnet, dass** in dem/den Übergangsbereich(en) von dem Steg (16) in die angrenzende Fläche des verdickten Bereichs (17) einerseits und/oder des betreffenden, ringförmigen Anschlußelements (2,3) andererseits der/die querschnittliche(n) Krümmungsradius (-en) größer ist/sind als 1 mm, vorzugsweise größer als 2 mm, insbesondere größer als 3 mm.

13. Vorrichtung nach einem der vorhergehenden Ansprüche, **dadurch gekennzeichnet, dass** der in Richtung der Drehachse der Drehlagerung (1) gemessene Abstand des flächigen Ansatzes (15) zu der bevorzugten Anschlußfläche (6,7) des mit ihm verbundenen, ringförmigen Anschlußelements (2,3) gleich oder größer ist als sein Abstand zu der gegenüberliegenden Stirnseite (21,23) des betreffenden Anschlußelements (2,3).

14. Vorrichtung nach einem der vorhergehenden Ansprüche, **gekennzeichnet durch** eine Verzahnung (22), die an der dem flächigen Ansatz (15) abgewandten Mantelfläche (14,20) der Drehverbindung (1) angeordnet ist und/oder an einem mit dem flächigen Ansatz (15) nicht einstückig verbundenen, ringförmigen Anschlußelement (2,3) oder einem derartig von dem flächigen Ansatz getrennten Teil eines solchen umlaufend angeordnet ist.

15. Vorrichtung nach einem der vorhergehenden Ansprüche, **dadurch gekennzeichnet, dass** die kranzförmig angeordneten Befestigungsmittel als vorzugsweise durchgehende Bohrungen (8,9) ausgebildet sind.

**Claims**

1. Device (1; 1'; 1") for rotatably coupling two coaxial connecting elements (2, 3), at least one of which is configured as a circular ring, and each of which has at least one annular surface that faces the corresponding surface of the respective other connecting element (2, 3) but is spaced apart therefrom by a gap (4), such that they are rotatable in opposite directions about an imaginary axis at the center of said annular connecting element (2, 3) and approximately perpendicular to the ring plane, wherein disposed in said gap (4) between said two connecting elements (2, 3) is a rotary joint, configured as a single- or multi-row rolling bearing, for absorbing axial and radial loads and tilting moments, and wherein provided in at least one end face (6, 7, 21, 23) of at least one said connecting element (2, 3) are coronally arranged fastening means for securing said connecting element (2, 3) to a system part, and wherein, further, at least one said annular connecting element (2, 3) comprises, on its surface (14, 20) facing away from said gap (4), a continuously circumferential, planar attachment (15) having an oblong or elongated cross section and extending away from said gap (4) to a freely terminating, peripheral circumferential edge (19), **characterized in that**

    a) said planar attachment (15) has in the region of its peripheral circumferential edge (19) a thickened region (17) that is connected, via a web (16) that is thinner than it is, to the respective said annular connecting element (2, 3), wherein

    b) said gap (4) between the two said annular connecting elements (2, 3) is sealed along at least one linear mouth region, particularly at both mouth regions, by at least one annular sealing element (10, 11).

2. Device according to claim 1, **characterized in that** at least a portion of said planar attachment (15), particularly in the region near its peripheral circumferential edge (19), is configured as one or more rotationally symmetrical contact surface(s) (18) for brake shoes.

3. Device according to claim 1 or 2, **characterized in that** the radial distance between said peripheral circumferential edge (19) of said attachment (15) and the nearest raceway for rolling elements (5) is smaller than the distance of that rolling-element raceway from the axis of rotation of said rolling bearing (1).

4. Device according to one of claims 1 to 3, **characterized in that** said planar attachment (15) is configured in one piece with the respective said annular connecting element (2, 3).

5. Device according to one of claims 1 to 4, **characterized in that** said planar attachment (15) is disposed on a jacket surface (14, 20) of the respective said annular connecting element (2, 3) that faces away from said gap (4).

6. Device according to one of the preceding claims, **characterized in that** said planar attachment (15) has the shape of a disk and/or extends along a plane, which preferably is intersected perpendicularly by the axis of rotation of said rolling bearing (1).

7. Device according to one of the preceding claims, **characterized in that** the two mutually opposite boundary surfaces (18) of said thickened region (17), particularly the top and bottom sides thereof, and/or the two mutually opposite boundary surfaces, particularly the top and bottom sides, of said web (16) connecting said thickened region (17) at said peripheral circumferential edge (19) to the respective said annular connecting element (2, 3), extend parallel to each other.

8. Device according to one of the preceding claims, **characterized in that** the lengths of the cross sections of said thickened region (17), on the one hand, and of said web (16), on the other hand, are approximately equal:

$$(l_{pB} - l_{St}) / (l_{pB} + l_{St}) \leq k_1,$$

where

    $l_{pB}$ = the radial length of the cross section of the thickened peripheral region;

    $l_{St}$ = the radial length of the cross section of the web between the thickened peripheral region and the particular annular connecting element;

    $k_1$ = for example 0.25, preferably 0.2, particularly 0.15.

9. Device according to one of the preceding claims, **characterized in that** the extent which said annular connecting element (2, 3) possesses parallel to the longitudinal direction of the cross section of the said thickened region (17) to which it is connected is approximately equal to or greater than the length of said thickened region (17):

$$l_{rA} \geq l_{pB}$$

where

    $l_{rA}$ = the lengthwise extent which said annular connecting element connected to said planar attachment possesses parallel to the longitudinal direction of the cross section of said planar attachment.

10. Device according to one of the preceding claims, **characterized in that** the extent which said annular connecting element (2, 3) possesses parallel to the longitudinal direction of the cross section of the said thickened region (17) to which it is connected is smaller than or approximately equal to the length of the cross section of said planar attachment (15):

$$k_2 \bullet l_{rA} \leq l_{fA}$$

where

    $l_{fA}$ = the length of the planar attachment ($l_{fA} = l_{pB} + l_{St}$)

    $k_2$ = for example 0.85, preferably 0.9, particularly 0.95.

**11.** Device according to one of the preceding claims, **characterized in that** said thickened peripheral region (17) is at least twice as thick as the web (16) connecting it to the respective said annular connecting element (2, 3), preferably at least 2.5 times as thick, particularly approximately 3 times as thick.

**12.** Device according to one of the preceding claims, **characterized in that** the regions of transition from said web (16) to the adjacent surface of said thickened region (17), on the one side, and/or of the respective said annular connecting element (2, 3), on the other side, the cross-sectional radius (radii) of curvature is/are greater than 1 mm, preferably greater than 2 mm, particularly greater than 3 mm.

**13.** Device according to one of the preceding claims, **characterized in that** the distance of said planar attachment (15) from said preferred connecting surface (6, 7) of the said annular connecting element (2, 3) connected to it, measured in the direction of the axis of rotation of said rolling bearing (1), is equal to or greater than its distance from the opposite end face (21, 23) of the respective said connecting element (2, 3).

**14.** Device according to one of the preceding claims, **characterized by** a toothing (22), which is arranged running in a circumferential manner around the jacket surface (14, 20) of the rotary connection (1) facing away from the planar attachment (15), and/or which is arranged running in a circumferential manner around an annular connecting element (2, 3), which is not integrated with the planar attachment (15), or at a part separated from the planar attachment in such way.

**15.** Device according to one of the preceding claims, **characterized in that** said coronally arranged fastening means are configured as preferably through-passing bores (8, 9).

**Revendications**

**1.** Dispositif (1 ; 1' ; 1") pour le couplage avec possibilité de rotation de deux éléments de raccordement (2, 3) coaxiaux dont au moins un est réalisé sous forme d'anneau circulaire, et lesquels présentent au moins chacun une surface annulaire qui est tournée vers la surface correspondante de respectivement l'autre élément de raccordement (2, 3), lequel est toutefois espacé de celle-ci par un interstice (4) de façon à ce qu'ils puissent tourner en opposition autour d'un axe imaginaire approximativement perpendiculaire au niveau de l'anneau au centre de l'élément de raccordement (2, 3) annulaire, où un système de palier de rotation réalisé sous forme de roulement à une ou plusieurs rangées est disposé dans l'interstice (4) entre les deux éléments de raccordement (2, 3) pour absorber des charges axiales et radiales ainsi que des couples de basculement, et où des moyens de fixation disposés sous forme de couronne dans au moins une face frontale (6, 7, 21, 23) d'au moins un élément de raccordement (2, 3) sont prévus pour la fixation de cet élément de raccordement (2, 3) à une pièce de l'installation et où, en outre, au moins un élément de raccordement (2, 3) annulaire présente au niveau de sa surface (14, 20) opposée à l'interstice (4) un épaulement plan (15) sur toute la circonférence qui présente une section oblongue ou allongée et s'étend en s'éloignant de l'interstice (4) jusqu'à un bord circonférentiel périphérique (19) non limité, **caractérisé en ce que**

a) l'épaulement plan (15) présente au niveau de son bord circulaire périphérique (19) une surépaisseur (17) qui est reliée par une entretoise (16), en comparaison de plus faible épaisseur, à l'élément de raccordement annulaire (2, 3) correspondant, où

b) l'interstice (4) entre les deux éléments de raccordement annulaires (2, 3) sur la longueur d'au moins une zone d'embouchure linéaire, en particulier au niveau des deux zones d'embouchure, est étanchéifié par au moins un élément d'étanchéité annulaire (10, 11).

**2.** Dispositif (1 ; 1' ; 1 ") selon la revendication 1, **caractérisé en ce qu'**au moins une partie de l'épaulement plan (15), en particulier dans la zone à proximité de son bord circonférentiel périphérique (19), est réalisée sous forme de surface(s) d'appui (18) de rotation symétrique pour des mâchoires de frein.

**3.** Dispositif selon la revendication 1 ou 2, **caractérisé en ce que** la distance radiale entre le bord circonférentiel périphérique (19) de l'épaulement (15) et la glissière de guidage (5) la plus proche pour des corps de roulement est inférieure à la distance entre cette glissière de guidage des corps de roulement et l'axe rotatif du système de palier de rotation (1).

**4.** Dispositif selon l'une des revendications 1 à 3, **caractérisé en ce que** l'épaulement plan (15) est réalisé en une pièce avec l'élément de raccordement annulaire (2, 3) correspondant.

**5.** Dispositif selon l'une des revendications 1 à 4, **caractérisé en ce que** l'épaulement plan (15) est disposé sur l'une des surfaces périphériques (14, 20) opposée à l'interstice (4) de l'élément de raccordement annulaire (2, 3) correspondant.

**6.** Dispositif selon l'une des revendications précédentes, **caractérisé en ce que** l'épaulement plan (15) présente la forme d'un disque et/ou s'étend sur la longueur d'un plan qui, de préférence, est traversé perpendiculairement par l'axe rotatif du système de palier de rotation (1).

**7.** Dispositif selon l'une des revendications précédentes, **caractérisé en ce que** les deux surfaces de limitation (18) opposées l'une par rapport à l'autre de la surépaisseur (17), en particulier sa face supérieure et inférieure, et/ou les deux surfaces de limitation opposées l'une par rapport à l'autre de l'entretoise (16) reliant la surépaisseur (17) au niveau du bord circonférentiel périphérique (19) à l'élément de raccordement (2, 3) annulaire correspondant, en particulier sa face supérieure et inférieure, sont parallèles.

**8.** Dispositif selon l'une des revendications précédentes, **caractérisé en ce que** les longueurs des sections, d'une part, de la surépaisseur (17) et, d'autre part, de l'entretoise (16) sont approximativement égales :

$$(l_{pB} - l_{St}) / (l_{pB} + l_{St}) \le k_1$$

sachant que

$l_{pB}$ = longueur de la section de la surépaisseur périphérique ;
$l_{St}$ = longueur de la section de l'entretoise entre la surépaisseur périphérique et l'élément de raccordement annulaire correspondant ;
$K_1$ = par exemple 0,25, de préférence 0,2, en particulier 0,15.

**9.** Dispositif selon l'une des revendications précédentes, **caractérisé en ce que** l'extension parallèle au sens longitudinal de la section de la surépaisseur (17) de l'élément de raccordement annulaire (2, 3) qui y est relié est approximativement égale ou supérieure à la longueur de la surépaisseur (17) :

$$l_{rA} \ge l_{pB}$$

sachant que

$l_{rA}$ = extension longitudinale parallèle au sens longitudinal de la section de l'épaulement plan de l'élément de raccordement annulaire relié à l'épaulement plan.

**10.** Dispositif selon l'une des revendications précédentes, **caractérisé en ce que** l'extension parallèle au sens longitudinal de la section de la surépaisseur (17) de l'élément de raccordement annulaire (2, 3) qui y est relié est inférieure ou approximativement égale à la longueur de la section de l'épaulement plan (15) :

$$k_2 * l_{rA} \le l_{rA}$$

sachant que

$l_{rA}$ = longueur de l'épaulement plan ($l_{rA} = l_{pB} + l_{St}$)
$k_2$ = par exemple 0,85, de préférence 0,9, en particulier 0,95.

**11.** Dispositif selon l'une des revendications précédentes, **caractérisé en ce que** la surépaisseur périphérique (17) est au moins deux fois plus épaisse que cette entretoise (16) reliant l'élément de raccordement annulaire (2, 3) correspondant, de préférence au moins 2,5 fois aussi épaisse, en particulier approximativement 3 fois aussi épaisse.

**12.** Dispositif selon l'une des revendications précédentes, **caractérisé en ce que** dans la/les zone(s) de transition entre l'entretoise (16) et la surface avoisinante, d'une part, de la surépaisseur (17) et/ou, d'autre part, de l'élément de raccordement annulaire (2, 3) correspondant, le/les rayon(s) de courbure transversal/transversaux est/sont supérieur(s) à 1 mm, de préférence supérieur(s) à 2 mm, en particulier supérieur(s) à 3 mm.

**13.** Dispositif selon l'une des revendications précédentes, **caractérisé en ce que** la distance mesurée dans le sens de l'axe rotatif du système de palier de rotation (1) de l'épaulement plan (15) par rapport à la surface de raccordement (6, 7) préférentielle de l'élément de raccordement annulaire (2, 3) qui lui est relié est égale ou supérieure à sa distance par rapport à la face frontale opposée (21, 23) de l'élément de raccordement (2, 3) correspondant.

**14.** Dispositif selon l'une des revendications précédentes, **caractérisé par** une denture (22) qui est disposée sur la surface périphérique (14, 20) du raccordement rotatif (1) opposée à l'épaulement plan (15) et/ou sur un élément de raccordement annulaire (2, 3) non relié en une pièce à l'épaulement plan (15) ou sur une pièce qui est séparée de l'épaulement plan de façon à ce qu'elle soit disposée sur toute la circonférence d'un tel élément de raccordement.

**15.** Dispositif selon l'une des revendications précédentes, **caractérisé en ce que** les moyens de fixation disposés sous forme de couronne sont conçus de préférence comme perçages débouchants (8, 9).

FIG.1

FIG.2

1"    6"

22"

15"

17"  16"  2"    23  5"  3"

FIG. 3